# FASCICULE DE BREVET EUROPEEN

(11) **EP 0 604 321 B1**
(45) Date de publication et mention de la délivrance du brevet: **17.07.1996**
(21) Numéro de dépôt: 93403160.0
(22) Date de dépôt: 23.12.1993
(51) Int. Cl.: B60K 15/04, B60K 15/035

(54) **Dispositif de remplissage et d'aération d'un réservoir de carburant**
Einfüll- und Belüftungsvorrichtung für einen Benzintank
Device for filling and venting a fuel tank

(30) Priorité: 23.12.1992 FR 9215637
(43) Date de publication de la demande: 29.06.1994
(73) Titulaire: PAUL JOURNEE S.A., F-92700 Colombes (FR)
(72) Inventeur: Romanek, Christian, F-60430 Noailles (FR)
(74) Mandataire: Lemaire, Marc

(56) Documents cités:
- EP-A- 0 333 549
- GB-A- 2 218 185
- US-A- 4 941 587

## Description

La présente invention concerne un dispositif pour le remplissage et l'aération d'un réservoir de carburant.

L'invention concerne plus particulièrement un dispositif du type comportant une tubulure de remplissage du réservoir dont l'orifice de remplissage est équipé d'un bouchon, une conduite de mise à l'air libre dont une extrémité est agencée à l'intérieur du réservoir à un niveau situé plus bas que celui d'une cloison supérieure du réservoir, et un clapet qui coopère avec l'autre extrémité du conduit de mise à l'air libre et qui est commandé par le bouchon pour obturer cette autre extrémité du conduit de mise à l'air libre lorsque le bouchon est ôté de manière à ménager une capacité d'expansion à la partie supérieure du réservoir délimitée par la cloison supérieure et par le niveau maximal de remplissage du réservoir.

La capacité d'expansion intégrée au réservoir permet au carburant liquide contenu dans le réservoir de se dilater sans risque de débordement, le phénomène de dilatation pouvant être dû à un accroissement de la température du carburant, notamment du fait d'une exposition prolongée du véhicule au soleil.

Le clapet de fermeture est commandé par le bouchon de manière que, en utilisation normale du véhicule, c'est-à-dire lorsque le bouchon est vissé sur l'orifice de remplissage, le conduit de mise à l'air libre débouche, directement, ou indirectement, dans l'atmosphère tandis que, lors de la phase de remplissage, son extrémité est fermée par le clapet afin d'éviter un remplissage excessif du réservoir, pour ménager la capacité d'expansion.

Parmi les dispositifs de ce type connus de l'état de la technique, comme par exemple celui décrit et représenté dans le document EP-A-0 333 549 l'extrémité du conduit de mise à l'air libre débouche dans une partie du dispositif qui communique avec la conduite de remplissage. Cet agencement n'est pas entièrement satisfaisant dans la mesure où il provoque des remontées de vapeurs de carburant qui se condensent sous la forme de carburant qui s'écoule à l'extérieur du véhicule dans la zone de la carrosserie où est situé le bouchon de remplissage.

L'invention a pour but de proposer un dispositif de remplissage qui remédie à cet inconvénient.

Par ailleurs, les véhicules modernes sont équipés d'un dispositif de filtration des vapeurs de carburant auquel il est nécessaire de pouvoir relier de manière simple et fiable ladite autre extrémité du conduit de mise à l'air libre.

Dans ce but, l'invention propose un dispositif de remplissage du type mentionné précédemment, ladite autre extrémité du conduit de mise à l'air libre débouchant dans une chambre séparée de manière étanche de la conduite de remplissage, et comportant un tube de mise à l'air libre qui relie la chambre à un dispositif de filtration des vapeurs de carburant, caractérisé en ce que la chambre est délimitée en partie par une membrane souple d'étanchéité.

Selon d'autres caractéristiques de l'invention :
- la portion de la membrane souple qui s'étend en vis-à-vis de ladite autre extrémité du conduit de mise à l'air libre porte, sur sa face interne, le clapet ;
- la face externe de ladite portion de la membrane souple d'étanchéité est reliée à un mécanisme de commande des déplacements du clapet ;
- le mécanisme de commande comporte au moins un bras de commande dont l'extrémité libre est reliée à la face externe de ladite portion de la membrane souple d'étanchéité ;
- la face externe de ladite portion de la membrane souple d'étanchéité comporte, réalisé venu de matière, un bouton d'accrochage qui est emboîté élastiquement dans un logement complémentaire formé à l'extrémité libre du bras de commande ;
- la chambre est également délimitée par une paroi rigide dans laquelle débouchent ladite autre extrémité du conduit de mise à l'air libre et une extrémité du tube de mise à l'air libre ;
- les extrémités du conduit et du tube de mise à l'air libre qui débouchent dans la paroi rigide sont adjacentes ;
- les extrémités du conduit et du tube de mise à l'air libre qui débouchent dans la paroi rigide sont coaxiales ;
- le bras de commande est monté mobile par rapport à la paroi rigide ;
- le bras mobile est monté articulé sur la paroi rigide ;
- le bras de commande est monté coulissant par rapport à la paroi rigide ;
- la membrane souple d'étanchéité comporte un bord périphérique qui est monté de manière étanche dans une gorge formée dans la cloison rigide ; et
- la portion de la membrane souple qui s'étend en vis-à-vis de ladite autre extrémité du conduit de mise à l'air libre comporte, sur sa face interne et réalisé venu de matière avec la membrane, un bourrelet annulaire d'étanchéité qui coopère avec un siège annulaire d'étanchéité formé à ladite autre extrémité du conduit de mise à l'air libre.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en section partielle illustrant un dispositif de remplissage et d'aération selon l'état de la technique ;
- la figure 2 est une vue à plus grande échelle, en section par un plan contenant les axes de la tubulure de remplissage, du conduit de mise à l'air libre et du tube de mise à l'air libre, d'un premier mode de réalisation d'un dispositif de remplissage et d'aération conforme aux enseignements de l'invention qui est illustré en position fermée du clapet ;
- la figure 3 est une vue similaire à celle de la figure 2 dans laquelle le clapet est illustré en position ouverte ;
- la figure 4 est une vue de détail illustrant une variante de réalisation de la membrane souple d'étanchéité des figures 2 et 3 ;
- la figure 5 est une vue similaire à celle de la figure 3 illustrant un second mode de réalisation d'un dispositif de remplissage et d'aération conforme aux enseignements de l'invention ;
- la figure 6 est une vue en section selon la ligne 6-6 de la figure 5 ;
- la figure 7 est une vue similaire à celle de la figure 3 illustrant un troisième mode de réalisation de l'invention ; et
- la figure 8 est une vue en section selon la ligne 8-8 de la figure 7.

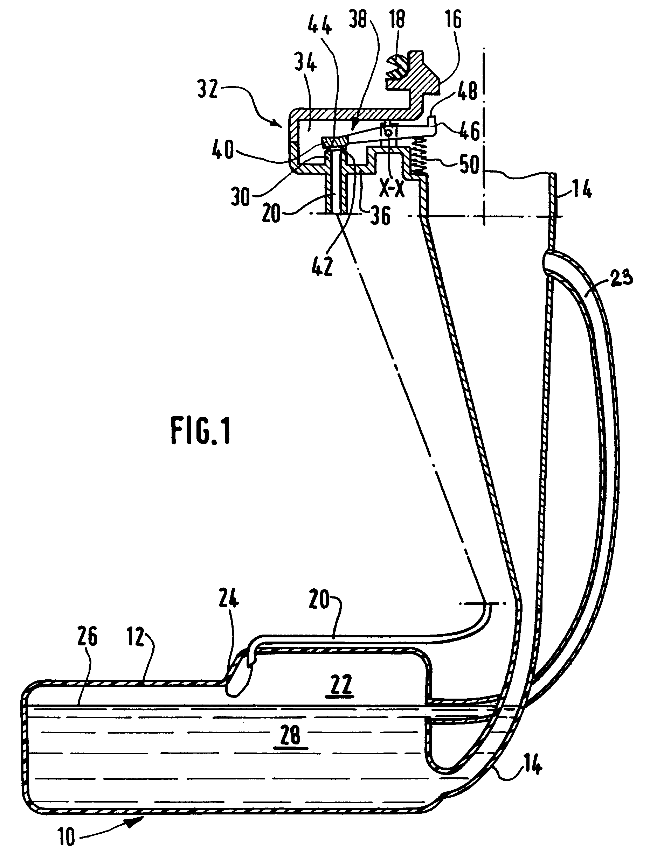

On a représenté sur la figure 1 un réservoir 10 de carburant d'un véhicule automobile comportant une cloison supérieure 12 et une tubulure de remplissage 14 dont l'orifice de remplissage 16 peut être fermé par un bouchon étanche (non représenté) qui coopère avec un joint d'étanchéité 18.

Le dispositif de remplissage et d'aération du réservoir 10 comprend également un conduit de mise à l'air libre 20, également appelé conduit de dégazage, qui pénètre dans une capacité d'expansion 22 du volume du carburant, agencée à la partie interne supérieure du réservoir 10.

Le dispositif de remplissage comporte également un conduit de refoulement 23 débouchant d'une part, dans la partie supérieure de la tubulure de remplissage et, d'autre part, dans le réservoir 10 à un niveau 26 correspondant au niveau maximal du carburant 28 lorsque le réservoir est rempli. Ce conduit 23 permet lors du remplissage d'évacuer les gaz contenus dans le réservoir 10.

L'extrémité supérieure 30 du conduit de mise à l'air libre 20 débouche dans un boîtier 32, réalisé venu de matière avec la partie supérieure de la tubulure de remplissage 14, et dont l'intérieur 34 communique avec l'intérieur de la tubulure de remplissage 14.

La cloison rigide inférieure 36 du boîtier 32 dans laquelle débouche l'extrémité supérieure 30 du conduit de mise à l'air libre 20 comporte un levier 38 qui est monté pivotant autour d'un axe X-X et dont une extrémité libre 40 porte un clapet d'étanchéité 42, réalisé sous la forme d'un bourrelet annulaire en matériau déformable élastiquement qui coopère avec un siège de clapet 44 constitué par la face radiale annulaire de l'extrémité supérieure 30 du conduit 20.

L'autre extrémité 46 du levier 38 est un talon avec la face supérieure 48 duquel est susceptible de coopérer une portion du bouchon de remplissage lorsque ce dernier est fixé sur l'orifice de remplissage 16, et ceci afin de solliciter le levier 38 en pivotement autour de l'axe X-X, dans le sens horaire en considérant la figure 1, à l'encontre d'un ressort de rappel 50 qui sollicite le clapet vers sa position fermée illustrée à la figure 1.

Lorsque le dispositif est dans sa position de remplissage illustrée à la figure 1 dans laquelle le bouchon est ôté, le conduit de mise à l'air libre 20 est obturé par le clapet 42 ce qui permet de ménager la capacité d'expansion 22 lors du remplissage.

Lorsque l'utilisateur remet le bouchon en place, il provoque l'ouverture du clapet 42 par basculement autour de l'axe X-X et la communication de l'extrémité supérieure 30 du conduit de mise à l'air libre 20 avec la tubulure de remplissage 14 est rétablie.

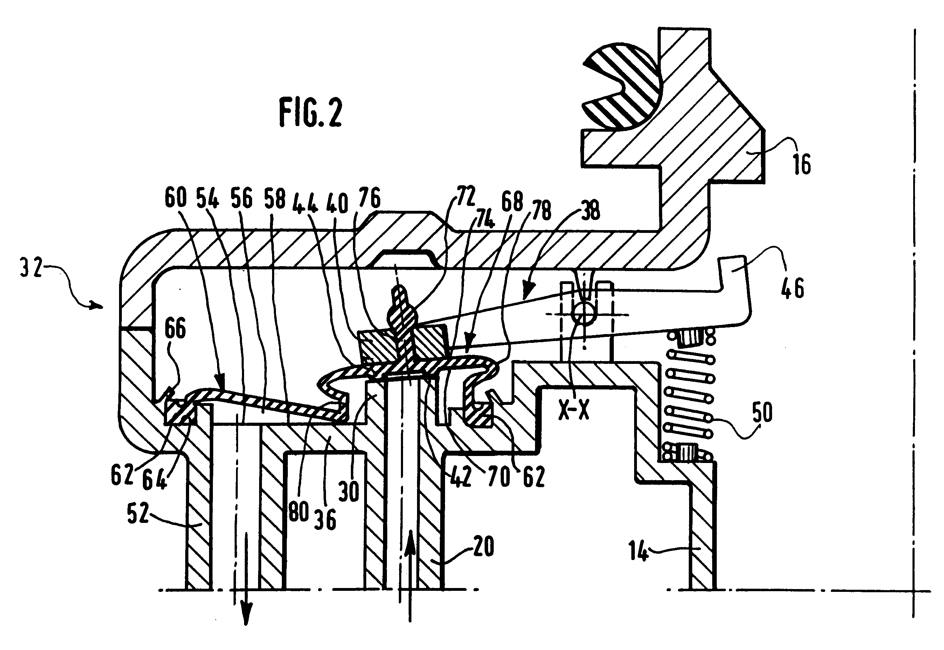

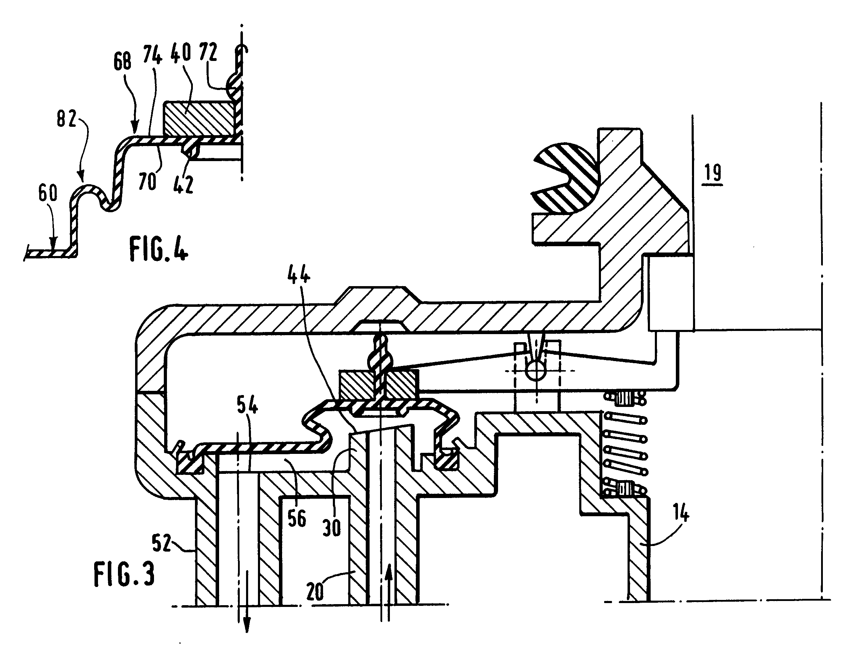

On décrira maintenant un premier mode de réalisation de l'invention illustré aux figures 2 et 3 sur lesquelles les composants identiques ou similaires à ceux de la figure 1 sont désignés par les mêmes chiffres de référence.

La cloison inférieure rigide 36 du boîtier 32, qui est réalisée par moulage en matière plastique avec une partie de la tubulure de remplissage 14, comporte un tube de mise à l'air libre 52 dont l'extrémité supérieure 54 débouche dans la cloison rigide inférieure 36 et dont l'autre extrémité (non représentée) est reliée à un dispositif de filtration des vapeurs de carburant (non représenté).

Les conduit 20 et tubulure 52 de mise à l'air libre débouchent dans une chambre intermédiaire de mise à l'air libre 56 qui est délimitée d'une part par la face interne 58 de la cloison rigide inférieure 36 et, d'autre part, par un membrane souple d'étanchéité 60.

La membrane souple comporte un bord périphérique 62 qui est monté serré dans une gorge complémentaire 64 formée dans la face interne 58 de la cloison rigide 36 dans laquelle il est maintenu comprimé par une lame déformable élastiquement 66 réalisée venue de matière avec la cloison rigide 36.

La portion centrale 68 de la membrane souple d'étanchéité 60 qui s'étend en vis-à-vis de l'extrémité supérieure 30 du conduit de mise à l'air libre 20 comporte, sur sa face interne 70, le bourrelet d'étanchéité 42 qui coopère avec le siège annulaire d'étanchéité 44.

Le bourrelet 42 est réalisé venu de matière avec la membrane souple en matériau élastomère 60, de même qu'un bouton d'accrochage 72 qui est formé sur la face externe 74 de la portion centrale 68 de la membrane souple d'étanchéité 60 et qui est emboîté élastiquement dans un logement 76 formé dans l'extrémité libre 40 du levier de commande 38.

Le clapet 42 est ainsi relié au levier de commande 38.

Afin de conférer à la membrane 60 une grande souplesse, celle-ci comporte dans sa portion centrale un pli 78 et un manchon 80.

Dans la position fermée du bouchon 19 illustrée à la figure 3, l'extrémité supérieure 30 du conduit de mise à l'air libre 20 communique, à travers la chambre intermédiaire de mise à l'air libre 56 avec l'extrémité 54 du tube 52 de mise à l'air libre.

Les vapeurs de carburant qui remontent du réservoir par le conduit de mise à l'air libre 20 sont donc ainsi entièrement isolées de la tubulure de remplissage 14 et sont dirigées vers le dispositif de filtration des vapeurs de carburant.

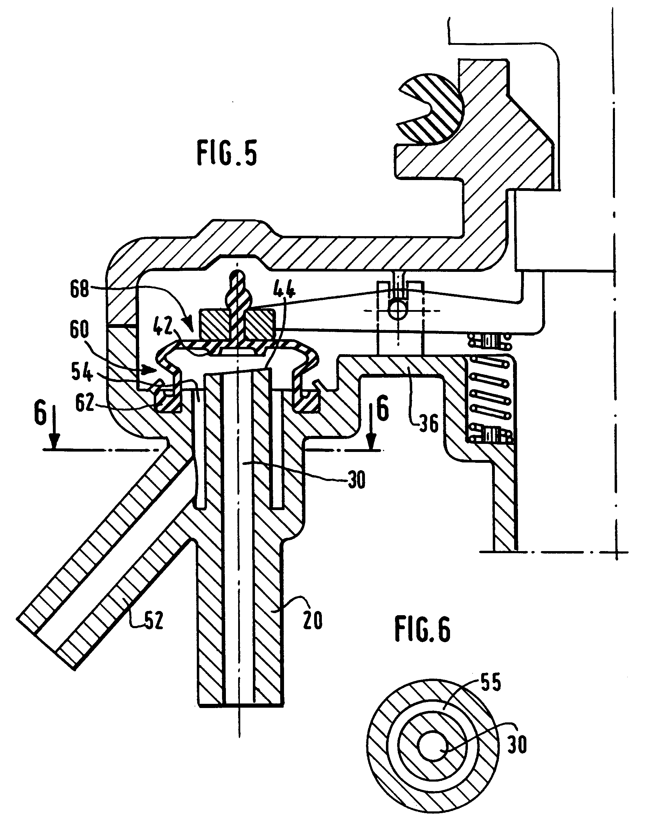

Dans la variante illustrée à la figure 4, la portion centrale 68 comporte une partie en soufflet en accordéon 82 qui permet d'améliorer encore les facultés de déformation élastique de la membrane 60 dans sa zone fonctionnelle centrale comportant le clapet de fermeture.

Dans le second mode de réalisation illustré aux figures 5 et 6, la membrane souple 60 est de dimensions réduites, et ceci est dû au fait que les extrémités 30 et 54 du conduit 20 et tube 52 de mise à l'air libre sont coaxiales.

L'agencement des deux extrémités est obtenu, directement de moulage, en prévoyant que le tube 52 est agencé transversalement par rapport au conduit 20 et qu'il débouche dans un canal annulaire 55 qui entoure l'extrémité supérieure 30 du conduit de mise à l'air libre 20.

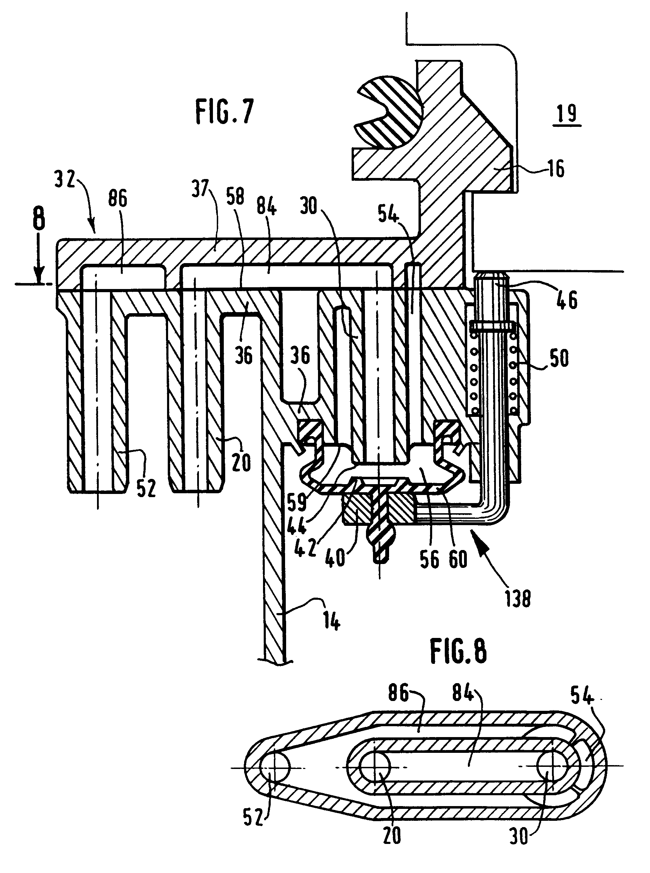

On décrira maintenant le troisième mode de réalisation illustré aux figures 7 et 8.

Dans ce mode de réalisation, l'organe de commande du clapet 42 est constitué par un bras 138 qui est monté coulissant dans la cloison rigide inférieure 36.

Le conduit 20 et le tube 52 de mise à l'air libre sont reliés à leurs extrémités 30 et 54 qui débouchent dans la chambre 56, cette dernière étant agencée ici sur la face externe 59 de la cloison rigide 36, à travers des passages 84 et 86 formés dans la cloison supérieure rigide 37 du boîtier 32.

Comme on peut le voir notamment à la figure 8, le passage 84 relie le conduit 20 à sa portion d'extrémité 30 et il est entouré par le passage 86 qui relie le conduit 52 à sa portion d'extrémité 54.

Comme dans le cas de la figure 5, les extrémités 30 et 54 débouchent coaxialement dans la face inférieure 59 de la cloison rigide inférieure 36.

Le fonctionnement du mode de réalisation illustré à la figure 7 est identique à celui des modes de réalisation précédents, la fermeture du clapet étant provoquée lorsque l'utilisateur ôte le bouchon 19, le bras de commande 138 étant rappelé élastiquement par le ressort de rappel 50 en coulissement, vers le haut en considérant la figure 7.

L'invention n'est pas limitée aux modes de réalisation qui viennent d'être décrits.

Il est par exemple possible de réaliser la membrane souple d'étanchéité indépendamment du clapet 42, la membrane se présentant alors sous la forme d'une cloison transversale qui relie les cloisons rigides supérieure et inférieure du boîtier 32 et qui entoure une partie du levier 38 ou du bras coulissant 138.

Dans un tel mode de réalisation, la portion» centrale de la membrane élastique traversée par le bras ou le levier peut constituer le moyen de rappel élastique de ce dernier.

## Revendications

1. Dispositif de remplissage et d'aération d'un réservoir de carburant (10) du type comportant une tubulure (14) de remplissage du réservoir dont l'orifice de remplissage (16) est équipé d'un bouchon, un conduit (20) de mise à l'air libre dont une extrémité (24) est agencée à l'intérieur du réservoir et un clapet (42, 44) qui coopère avec l'autre extrémité (30) du conduit de mise à l'air libre et qui est commandé par le bouchon pour obturer ladite autre extrémité (30) du conduit de mise à l'air libre (20) lorsque le bouchon est ôté de manière à ménager une capacité d'expansion (22) à la partie supérieure du réservoir (10) délimitée par ladite cloison supérieure (12) et le niveau maximal de remplissage (26) du réservoir, ladite autre extrémité (30) du conduit (20) de mise à l'air libre débouchant dans une chambre (56) séparée de manière étanche de la tubulure de remplissage (14) et comportant un tube (52) de mise à l'air libre qui relie la chambre (56) à un dispositif de filtration des vapeurs de carburant, caractérisé en ce que la chambre (56) est délimitée en partie par une membrane souple d'étanchéité (60).

2. Dispositif selon la revendication 1, caractérisé en ce que la portion (68) de la membrane souple (60) qui s'étend en vis-à-vis de ladite autre extrémité (30) du conduit (20) de mise à l'air libre porte, sur sa face interne (70), le clapet (42).

3. Dispositif selon la revendication 2, caractérisé en ce que la face externe (74) de ladite portion (68) de la membrane souple d'étanchéité (60) est reliée à un mécanisme (38) de commande des déplacements du clapet.

4. Dispositif selon la revendication 3, caractérisé en ce que le mécanisme de commande comporte au moins un bras de commande (38, 138) dont l'extrémité libre (40) est reliée à la face externe (74) de ladite portion (68) de la membrane souple d'étanchéité (60).

5. Dispositif selon la revendication 4, caractérisé en ce que la face externe (74) de ladite portion (68) de la membrane souple d'étanchéité comporte, réalisé venu de matière, un bouton d'accrochage (72) qui est emboîté élastiquement dans un logement complémentaire (76) formé à l'extrémité libre (40) du bras de commande (38, 138).

6. Dispositif selon l'une quelconque des revendications 1 à 5, caractérisé en ce que la chambre (56) est également délimitée par une paroi rigide (76) dans laquelle débouchent ladite autre extrémité (30) du conduit (20) de mise à l'air libre et une extrémité (54) du tube (52) de mise à l'air libre.

7. Dispositif selon la revendication 6, caractérisé en ce que les extrémités (30, 54) du conduit (20) et du tube (52) de mise à l'air libre qui débouchent dans la paroi rigide (36) sont adjacentes.

8. Dispositif selon la revendication 6, caractérisé en ce que les extrémités (30, 54) du conduit (20) et du tube (52) de mise à l'air libre qui débouchent dans la paroi rigide (36) sont coaxiales.

9. Dispositif selon l'une quelconque des revendications 6 à 8 prises en combinaison avec l'une des revendications 4 ou 5, caractérisé en ce que le bras de commande (38, 138) est monté mobile par rapport à la paroi rigide (36).

10. Dispositif selon la revendication 9, caractérisé en ce que le bras mobile (38) est monté articulé sur la paroi rigide (36).

11. Dispositif selon la revendication 9, caractérisé en ce que le bras de commande (138) est monté coulissant par rapport à la paroi rigide (36).

12. Dispositif selon l'une quelconque des revendications 6 à 11, caractérisé en ce que la membrane souple d'étanchéité (60) comporte un bord périphérique (62) qui est monté de manière étanche dans une gorge (64) formée dans la cloison rigide (36).

13. Dispositif selon l'une quelconque des revendications 1 à 12, caractérisé en ce que la portion (68) de la membrane souple qui s'étend en vis-à-vis de ladite autre extrémité (30) du conduit de mise à l'air libre (20) comporte, sur sa face interne (70) et réalisé venu de matière avec la membrane (60), un bourrelet annulaire d'étanchéité (42) qui coopère avec un siège annulaire d'étanchéité (44) formé à ladite autre extrémité (30) du conduit de mise à l'air libre (20).

## Claims

1. Filling and aerating apparatus for a fuel tank (10), of the type comprising a filling pipe (14) for the tank, the filling mouth (16) of which is equipped with a closure member, an atmospheric vent duct (20), one end (24) of which is arranged inside the tank, and a stop valve (42, 44) which cooperates with the other end (30) of the atmospheric vent duct (20), and which is controlled by the closure member in order to obturate the said other end (30) of the atmospheric vent duct (20) when the closure member is removed in such a way as to define an expansion space (22) in the upper part of the tank (10), bounded by the said upper wall (12) and the maximum filling level (26) in the tank, the said other end (30) of the atmospheric vent duct (20) being open into a chamber (56), which is sealingly separated from the filling pipe (14) and which comprises a fresh air tube (52) that connects the chamber (56) to a device for filtering fuel vapours, characterised in that the chamber (56) is delimited partly by a flexible sealing membrane (60).

2. Apparatus according to Claim 1, characterised in that the portion (68) of the flexible membrane (60) which lies facing the said other end (30) of the atmospheric vent duct (20) carries the stop valve (42) on its inner face (70).

3. Apparatus according to Claim 2, characterised in that the outer face (74) of the said portion (68) of the flexible sealing membrance (60) is connected to a mechanism (38) for controlling displacements of the stop valve.

4. Apparatus according to Claim 3, characterised in that the control mechanism comprises at least one control arm (38, 138), the free end (40) of which is connected to the outer face (74) of the said portion (68) of the flexible sealing membrane (60).

5. Apparatus according to Claim 4, characterised in that the outer face (74) of the said portion (68) of the flexible sealing membrane includes an integral retaining button (72) which is held elastically within a complementary housing (76) formed in the free end (40) of the control arm (38, 138).

6. A device according to any one of Claims 1 to 5, characterised in that the chamber (56) is further delimited by a rigid wall (36), into which the said other end (30) of the atmospheric vent duct (20), and one end (54) of the fresh air tube (52), are open.

7. Apparatus according to Claim 6, characterised in that the ends (30, 54) of the atmospheric vent duct (20) and fresh air tube (52) which are open in the rigid wall (36) are adjacent to each other.

8. Apparatus according to Claim 6, characterised in that the ends (30, 54) of the atmospheric vent duct (20) and fresh air tube (50) which are open in the rigid wall (36) are coaxial with each other.

9. Apparatus according to any one of Claims 6 to 8 in combination with Claim 4 or Claim 5, characterised in that the control arm (38, 138) is mounted for movement with respect to the rigid wall (36).

10. Apparatus according to Claim 9, characterised in that the movable arm (38) is articulated on the rigid wall (36).

11. Apparatus according to Claim 9, characterised in that the control arm (138) is mounted for sliding movement with respect to the rigid wall (36).

12. Apparatus according to any one of Claims 6 to 11, characterised in that the flexible sealing membrane (60) has a peripheral edge (62) which is mounted sealingly in a groove (64) formed in the rigid wall (36).

13. Apparatus according to any one Claims 1 to 12, characterised in that the portion (68) of the flexible membrane which lies facing the said other end (30) of the atmospheric vent duct (20) includes, on its inner face (70) and formed integrally with the membrane (60), an annular sealing bead (42) which cooperates with an annular sealing seat (44) formed at the said other end (30) of the atmospheric vent duct (20).

## Patentansprüche

1. Einfüll- und Belüftungsvorrichtung für einen Benzintank (10) der Bauart mit einem Rohrstutzen (14) zum Befüllen des Tanks, dessen Einfüllöffnung (16) mit einem Deckel versehen ist, mit einem Rohr (20) zur Abgabe an die Atmosphäre, von dem ein Ende (24) im Inneren des Tanks vorgesehen ist und mit einem Ventil (42, 44), das mit dem anderen Ende (30) des Rohrs zur Abgabe an die Atmosphäre zusammenwirkt und das von dem Deckel gesteuert wird, um das andere Ende (30) des Rohrs zur Abgabe an die Atmosphäre (20) zu verschließen, wenn der Deckel entfernt wird, um ein Ausdehnungsvolumen (22) am oberen Teil des Tanks (10) zu ermöglichen, das von der oberen Wand (12) und der maximalen Einfüllhöhe (26) eingegrenzt wird, wobei das andere Ende (30) des Rohrs (20) zur Abgabe an die Atmosphäre in eine Kammer (56) mündet, die gegen den Rohrstutzen zum Einfüllen (14) in dichter Weise getrennt ist und mit einer Röhre (52) zur Abgabe an die Atmosphäre, die die Kammer (56) mit einer Vorrichtung zum Filtrieren der Benzindämpfe verbindet,
**dadurch gekennzeichnet**, daß die Kammer (56) teilweise von einer elastischen Membran zum Abdichten (60) eingegrenzt wird.

2. Vorrichtung nach Anspruch 1, **dadurch gekennzeichnet**, daß der Abschnitt (68) der elastischen Membran, der sich gegenüber dem anderen Ende (30) des Rohrs (20) zur Abgabe an die Atmosphäre erstreckt, auf seiner Innenseite (70) das Ventil (42) trägt.

3. Vorrichtung nach Anspruch 2, **dadurch gekennzeichnet**, daß die Außenseite des Abschnitts (68) der elastischen Membran zum Abdichten (60) an einen Mechanismus (38) zur Steuerung der Bewegungen des Ventils angeschlossen ist.

4. Vorrichtung nach Anspruch 3, **dadurch gekennzeichnet**, daß der Steuermechanismus wenigstens einen Steuerarm (38, 138) umfaßt, dessen freies Ende (40) mit der Außenseite (74) des Abschnitts (68) der elastischen Membran zum Abdichten (60) verbunden ist.

5. Vorrichtung nach Anspruch 4, **dadurch gekennzeichnet**, daß die Außenseite (74) des Abschnitts (68) der elastischen Membran zum Abdichten einen aus dem gleichen Material gefertigten Anhängeknopf (72) umfaßt, der elastisch in ein komplementäres Lager (76) eingesteckt wird, das am freien Ende (40) des Steuerarms (38, 138) ausgebildet ist.

6. Vorrichtung nach einem der Ansprüche 1 bis 5, **dadurch gekennzeichnet**, daß die Kammer (56) auch von einer starren Wand (76) eingegrenzt wird, in die das andere Ende (30) des Rohrs (20) zur Abgabe an die Atmosphäre und ein Ende (54) der Röhre (52) zur Abgabe an die Atmosphäre münden.

7. Vorrichtung nach Anspruch 6, **dadurch gekennzeichnet**, daß die Enden (30, 54) des Rohrs (20) und der Röhre (52) zur Abgabe an die Atmosphäre, die in die starre Wand (36) münden, nebeneinander liegen.

8. Vorrichtung nach Anspruch 6, **dadurch gekennzeichnet**, daß die Enden (30, 54) des Rohrs (20) und der Röhre (52) zur Abgabe an die Atmosphäre, die in die starre Wand (36) münden, koaxial sind.

9. Vorrichtung nach einen der Ansprüche 6 bis 8, im Zusammenhang mit einem der Ansprüche 4 oder 5, **dadurch gekennzeichnet**, daß der Steuerarm (38, 138) beweglich in Bezug zur starren Wand (36) montiert ist.

10. Vorrichtung nach Anspruch 9, **dadurch gekennzeichnet**, daß der bewegliche Arm (38) auf der starren Wand (36) angelenkt ist.

11. Vorrichtung nach Anspruch 9, **dadurch gekennzeichnet**, daß der Steuerarm (138) verschiebbar in Bezug zur starren Wand (36) montiert ist.

12. Vorrichtung nach einem der Ansprüche 6 bis 11, **dadurch gekennzeichnet**, daß die elastische Membran zum Abdichten (60) einen in Umfangsrichtung verlaufenden Rand (62) umfaßt, der in dichter Weise in eine Vertiefung (64), die in der starren Wand (36) ausgebildet ist, montiert ist.

13. Vorrichtung nach einem der Ansprüche 1 bis 12, **dadurch gekennzeichnet**, daß der Abschnitt (68) der elastischen Membran, der sich gegenüber vom anderen Ende (30) des Rohrs zum Entlüften (20) erstreckt, auf seiner Innenseite (70) einen aus einem Stück zusammen mit der Membran (60) geformten ringförmigen Wulst zum Abdichten (42) umfaßt, der mit einem rinförmigen Sitz zum Abdichten (44) zusammenwirkt, der am anderen Ende (30) des Rohrs zur Abgabe an die Atmosphäre (20) ausgebildet ist.
